# EUROPEAN PATENT SPECIFICATION

(11) **EP 3 117 474 B1**
(45) Date of publication and mention of the grant of the patent: **24.01.2018**
(21) Application number: 15738054.4
(22) Date of filing: 10.07.2015
(51) Int. Cl.: H01M 4/04, H01M 4/131, H01M 4/1391, H01M 4/36, H01M 4/505, H01M 4/525, H01M 4/58, H01M 4/62, H01M 10/0525, H01M 4/02

(54) **CATHODE FOR LITHIUM BATTERIES**
KATHODE FÜR LITHIUMBATTERIEN
CATHODE POUR BATTERIES AU LITHIUM

(30) Priority: 10.07.2014 EP 14382269
(43) Date of publication of application: 18.01.2017
(73) Proprietor: Repsol, S.A., 28045 Madrid (ES)
(72) Inventor: PÁEZ DUEÑAS, Antonio, E-28935 Móstoles (Madrid) (ES); GARCÍA SAN LUIS, Jesús, E-28935 Mostoles (Madrid) (ES); AMARILLA ÁLVAREZ, José Manuel, E-28049 Madrid (ES); VÁZQUEZ SANTOS, Beatriz, E-28049 Madrid (ES); MENÉNDEZ LÓPEZ, Rosa María, E-33080 Oviedo (ES); SANTAMARÍA RAMÍREZ, Ricardo, E-33080 Oviedo (ES); BLANCO RODRÍGUEZ, Clara, E-33080 Oviedo (ES); CALLE GÓMEZ, Fernando, E-28040 Madrid (ES)
(74) Representative: Balder IP Law, S.L.
(86) International application number: PCT/EP2015/065892
(87) International publication number: WO 2016/005590

(56) References cited:
- WO-A1-2014/044210
- CN-A- 101 710 619
- CN-A- 103 198 935
- PAUL V BRAUN ET AL: "High power rechargeable batteries", CURRENT OPINION IN SOLID STATE AND MATERIALS SCIENCE, vol. 16, no. 4, 15 June 2012 (2012-06-15), pages 186-198, XP028401983, ISSN: 1359-0286, DOI: 10.1016/J.COSSMS.2012.05.002 [retrieved on 2012-06-08]

## Description

### FIELD OF THE INVENTION

The invention relates to a cathode comprising a current collector and a new electrode composite disposed on said current collector, and to a method for its manufacturing. The invention also relates to a lithium ion cell comprising said cathode, to cell modules, and battery packs and to devices comprising them, such as electric vehicles and portables electric devices.

### BACKGROUND OF THE INVENTION

Lithium-ion batteries have become, since their introduction into the market in the early 1990s, the predominant battery technology for portable electronic devices in the last years due to their high energy density, high voltage, good cycle life, low environmental concern and excellent storage characteristics. However, due to the development of new types of electronic devices and automobiles, such as electric vehicles (EVs), hybrid electric vehicles (HEVs), and plug-in hybrid electric vehicles (PHEVs), batteries which comply with higher requirements in terms of higher energy/power density, better rate capability, longer cycle life, small volume, light-weight and low cost, are continuously demanded.

Among the cathode active materials studied for high voltage lithium-ion batteries (LIBs), various lithium transition metal oxides having a spinel structure have been proposed, since they can reversibly intercalate lithium at high voltage. These active materials with low electronic conductivity need a conductive agent, among which graphite, graphene, carbon fibers, carbon nanotubes, carbon black, metals or conductive polymers such as polyphenylene derivative, have been proposed. Recently, various lithium transition metal compounds having olivine structure have been proposed as safe electrodes for LIBs. Cathodes for LIBs have emerged with an electrode composite disposed on a current collector, wherein the electrode composite comprises an electrochemical active material and a conductive agent, as above mentioned, together with a binder for providing the electrode composite with mechanical resistance and enhanced adhesion to the current collector. This type of electrode composite is prepared according to the known doctor Blade method by deposition on the current collector.

Many documents have been recently published disclosing different aspects and developments related to this type of cathodes for LIBs. For example EP 2437337 discloses cathodes comprising a current collector and an active electrode composite deposited on it, comprising a lithium transition metal oxide having a spinel structure, one conductive material, such as carbon black or graphene, and a binder where at least part of the surface has been fluorinated to reduce side reactions between the electrolyte and the active cathode material. These electrode composites present thicknesses of only up to 20 µm and consequently low active mass loading and areal capacities (mAh/cm²).

WO2013157873 discloses an electrode for a secondary battery comprising a current collector and deposited on it, an electrode composite comprising an electrode active material, a binder and a conductive material. This document only discloses the thicknesses of the current collector from 3 µm to 500 µm. As the conductive materials graphene and carbon nanotubes are disclosed, which further optionally comprise other materials such as natural graphite, artificial graphite, carbon black, carbon fibers, acetylene black, etc. WO2013157863 also discloses an electrode for a secondary battery comprising a current collector of 3 to 500 µm thickness, comprising a conductive coating of 10 to 500 nm deposited on the collector and an electrode composite deposited on the conductive coating-current collector assembly. This construction improves the electric contact between current collector and electrode composite and thus decreasing the internal cell resistance. Among the conductive additives, natural graphite, artificial graphite, carbon black, carbon fibers, acetylene black, are mentioned.

CN102420323 discloses an electrode composite comprising an electrode active material, graphene and a conductive material selected from the group of graphite, expanded graphite, carbon nanotubes, carbon fibers, activated carbon, amorphous carbon, carbon black, conductive polymers, etc. This document explicitly discloses in the examples composite materials containing graphene (see Table 2), but the specific combination of a lithium manganese oxide spinel with graphene and carbon black is not disclosed. This document does not refer either to thicknesses of the electrode composite.

Richard Prabakar, S.J. et al. (Journal Electrochemical Soc., 160 (6) A823-A837 (2013)) disclose electrode composite materials including lithium nickel manganese oxide spinel and 1, 2.5 and 5 wt% of graphene. According to the authors the best electrochemical performance is achieved with 2.5 wt% of graphene, whereas the lithium nickel manganese oxide spinel with 5 wt% graphene exhibited less capacity due to the agglomeration of graphene.

WO 2014/044210 A1 discloses materials comprising lithium iron phosphate, acetylene black, PVDF and graphene, which when initially spread have a thickness of up to 300 µm, but is silent about the final thickness of the composite, which will be significantly reduced, typically more than seven times, after casting and drying.

In the same way, CN 103 198 935 A discloses composites having a thickness of 150µm prior to drying and compression ("Roll press") to provide a far thinner material (not above 40 µm).

Example 3 of CN101710619 discloses an electrode composite comprising 0.5 parts of graphene, 0.5 parts of carbon black, 1 part of PTFE and 98 parts of LiMn₂O₄. The final thickness is reported to be 60 µm.

Document WO 2013/192258 discloses a cathode comprising an electroactive material and graphene interspersed with the electroactive material and a binder. According to this application graphene improves the cathode performance in respect of the cathodes where CB is used. The document further teaches limited contents of graphene between 0.1 and 2.5% as sole electronic conductor additive to maximize the content of the electroactive material and thus the electrode specific capacity. The document refers in general to cathode dimensions of at least 10 µm and up to 200 µm, pointing out that cathodes having relatively thicker dimensions may be desired to meet energy density requirements. However, the only cathodes specifically disclosed have in the best cases 31 µm in Table 4, taking into account that the thicknesses shown therein comprise also the aluminium current collector foil. Thicker electrode composites are not achieved probably due to cracks in the composite as well as loss of adhesion with the current collector

Although, as above exposed different approaches have been considered to improve the characteristics of the cathodes for lithium ion batteries, and thus the lithium ion batteries in general, there is still the need in the state of the art of providing lithium ion batteries with improved electrochemical performance.

### SUMMARY OF THE INVENTION

In this respect, the inventors of the present invention have found that the use of a graphene and carbon black combination as electronic conductive additives allow to manufacture new electrode composites with high thickness and high active mass loading, which exhibit improved electrochemical performances such as a high specific capacity and high specific energy. On the contrary, comparative examples carried out by the inventors, as explained below, of electrode composites with only one electronic conductive additive, either carbon black or graphene, have shown respectively that the corresponding electrode composites either present fractures and are not homogeneous or lack the required electrochemical performances for its use in rechargeable batteries. Moreover, as it is indicated in the state of the art, the content of electrochemically active material in the battery should be maximized in order to provide maximal specific capacity and specific energy. The inventors have found that the increased thickness which has been reached using a graphene and carbon black combination allows raising notably the overall active mass loading (mg/cm²) in the battery. This increase remarkably improves the electrochemical properties of the electrode composite, specially the areal capacity (mAh/cm²) and areal energy (mWh/cm²), and consequently the battery performances. That is, the possibility of providing an electrode composite with increased thickness allows a greater load of active material, preferably a spinel or an olivine based compounds, for the same amount of other components, and thus results in improved overall performance, i.e. improved capacity and energy per area or kilogram of battery.

Therefore in a first aspect the invention relates to a new electrode composite, which comprises:
4 wt% to 8 wt% graphene
4 wt% to 8 wt% carbon black
4 wt% to 18 wt% binder
   the rest being a lithium transition metal oxide having spinel structure or a lithium transition metal compound having olivine structure, and presenting a thickness above 80 µm and an active mass loading above 7 mg/cm².

In another aspect the invention relates to a cathode, hereinafter also referred to as the cathode of the invention, comprising a current collector and the new electrode composite of the invention disposed on the current collector.

In a further aspect the invention relates to a lithium ion cell comprising the cathode of the invention.

According to another aspect the invention relates to a battery module comprising the cathode of the invention.

According to a further aspect the invention also relates to a battery pack comprising at least a battery module according to the invention.

According to a still further aspect the invention relates to a device comprising a lithium ion cell, a battery module or a battery pack according to the invention.

In still a further aspect the invention relates to a method for preparing the new cathode composite of the invention.

### DESCRIPTION OF THE DRAWINGS

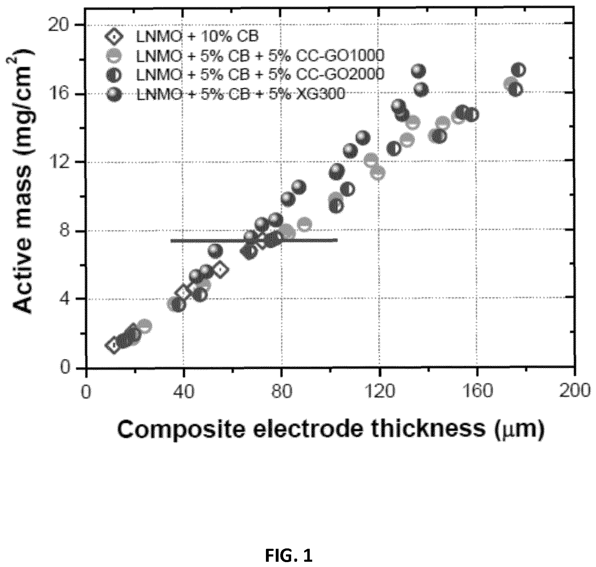

Figure 1 represents the active mass loading (mg/cm²) vs. the composite electrode thickness (µm) of four different electrode formulations comprising: (1) LiNi_{0.5}Mn_{1.5}O₄ (LNMO) and 10 wt% carbon black (CB) (comparative); (2) LNMO and 5 wt% graphene (CC-GO1000) and 5 wt% CB; (3) LNMO and 5 wt% graphene (CC-GO2000) and 5 wt% CB; and (4) LNMO and 5 wt% graphene (XG300) and 5 wt% CB.

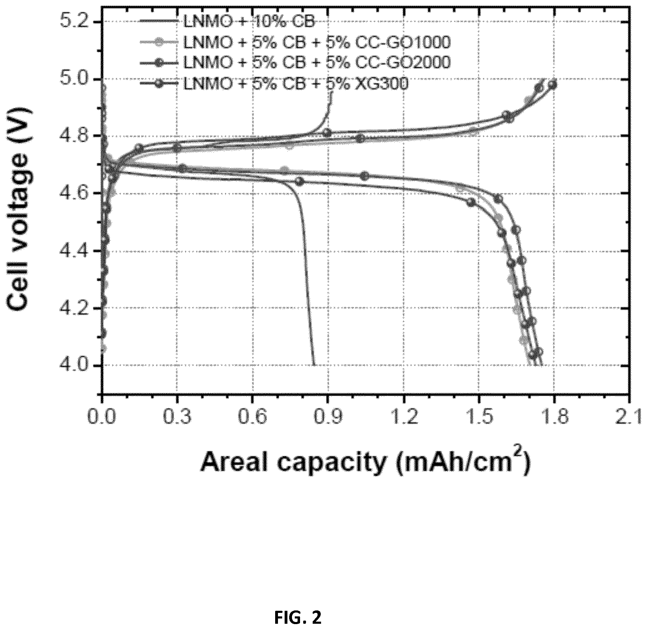

Figure 2 represents the cell voltage (V) vs. the areal capacity (mAh/cm²) of four different electrode formulations comprising (1) LiNi_{0.5}Mn_{1.5}O₄ (LNMO) and 10 wt% carbon black (CB) (comparative); (2) LNMO and 5 wt% graphene (CC-GO1000) and 5 wt% CB; (3) LNMO and 5 wt% graphene (CC-GO2000) and 5 wt% CB; and (4) LNMO and 5 wt% graphene (XG300) and 5 wt% CB registered at 30 mA/g (0.2C) rate.

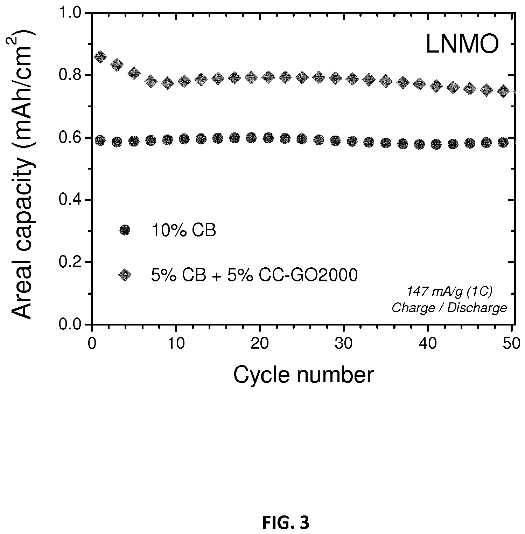

Figure 3 shows the comparative evolution of areal capacity (mAh/cm²) vs. cycle number at 1C rate for Lithium half-cells using two different cathode composites, with and without graphene, e.g.: (1) LiNi_{0.5}Mn_{1.5}O₄ (LNMO) and 10 wt% carbon black (CB); and (3) LNMO and 5 wt% graphene (CC-GO2000) and 5 wt% CB.

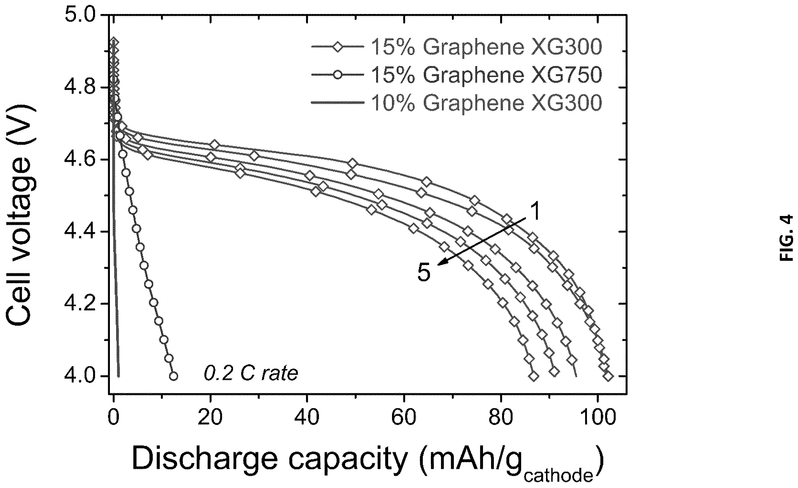

Figure 4 represents the cell voltage (V) vs. the discharge capacity (mAh/g) of three different electrode formulations comprising LiNi_{0.5}Mn_{1.5}O₄ (LNMO) and (11) 15 wt% graphene (XG300), (12) 15 wt% graphene (XG750) and (13) 10 wt% graphene (XG300), all comparative examples, which prove that graphene alone does not provide adequate ciclability.

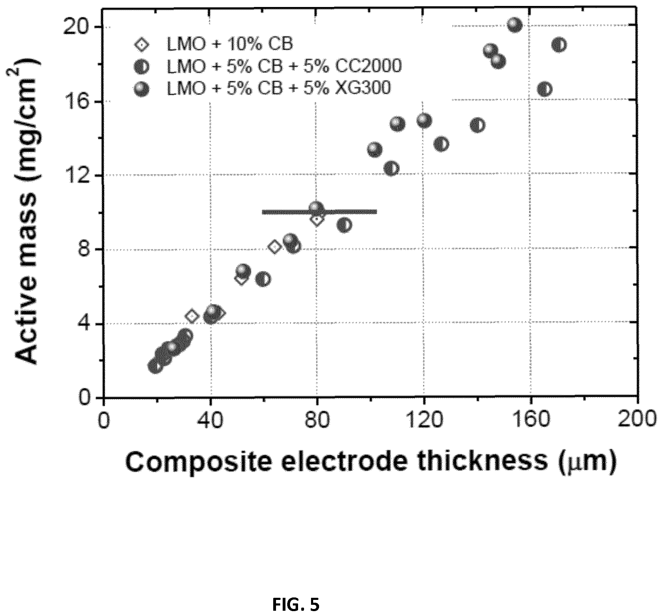

Figure 5: In order to prove the general applicability of the prenset invention, the experiments as per figure 1 were reproduced using LiMn₂O₄ (LMO) instead of LiNi_{0.5}Mn_{1.5}O₄ (LNMO). Accordingly, Figure 5 represents the active mass loading (mg/cm²) vs. the composite electrode thickness (µm) of three different electrode formulations comprising: (5) LiMn₂O₄ (LMO) and 10 wt% carbon black (CB) (comparative); (6) LMO and 5 wt% graphene (CC-GO2000) and 5 wt% CB; and (7) LMO and 5 wt% graphene (XG300) and 5 wt% CB.

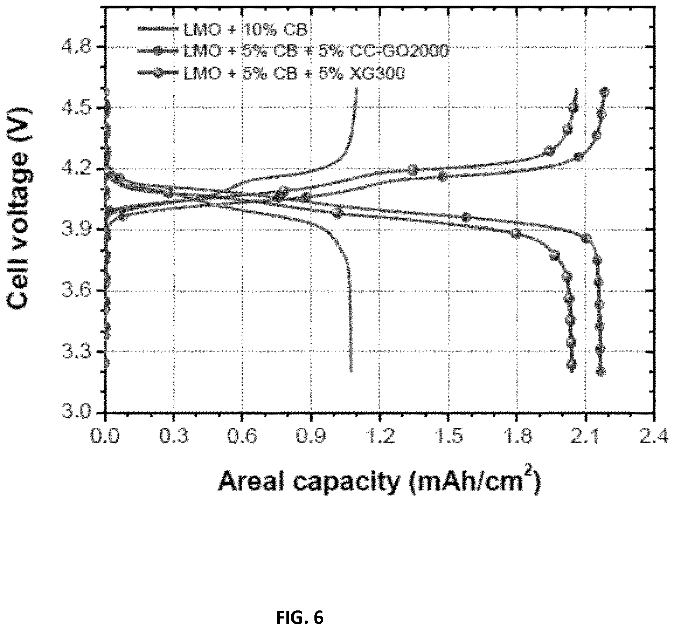

Figure 6: In order to prove the general applicability of the prenset invention, the experiments as per figure 2 were reproduced using LiMn₂O₄ (LMO) instead of LiNi_{0.5}Mn_{1.5}O₄ (LNMO). Accordingly, Figure 6 represents the cell voltage (V) vs. the areal capacity (mAh/cm²) of three different electrode formulations comprising: (5) LiMn₂O₄ (LMO) and 10 wt% carbon black (CB) (comparative); (6) LMO and 5 wt% graphene (CC-GO2000) and 5 wt% CB; and (7) LMO and 5 wt% graphene (XG300) and 5 wt% CB registered at 0.2C rate (30 mA/g)

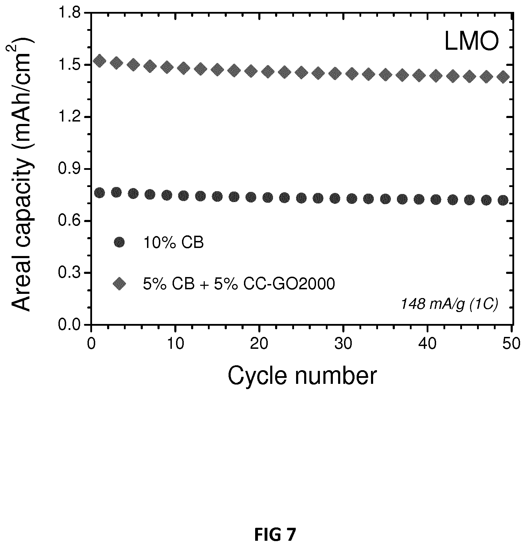

Figure 7: In order to prove the general applicability of the prenset invention, the experiments as per figure 3 were reproduced using LiMn₂O₄ (LMO) instead of LiNi_{0.5}Mn_{1.5}O₄ (LNMO). Accordingly, Figure 7 shows the comparative evolution of areal capacity (mAh/cm²) vs. cycle number for Lithium half-cells using two different cathode composites, with and without graphene, e.g.: (5) LiMn₂O₄ (LMO) and 10 wt% carbon black (CB) (comparative); and (6) LMO and 5 wt% graphene (CC-GO2000) and 5 wt% CB registered at 1C rate.

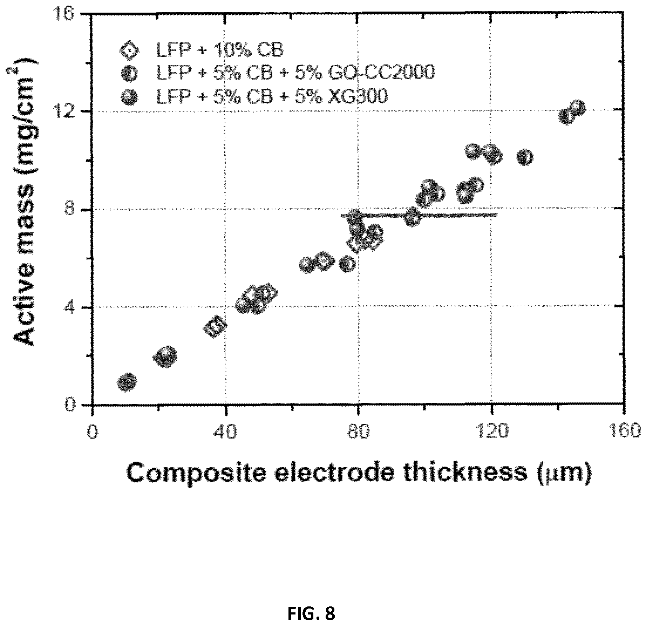

Figure 8: In order to further prove the general applicability of the prenset invention, the experiments as per figures 1 and 5 were reproduced using LiFePO₄ (LFP), an active material showing olivine structure, instead of LNMO or LMO, active materials both having spinel structure. Accordingly, Figure 8 represents the active material mass (mg/cm²) vs. the composite electrode thickness (µm) of three different electrode formulations comprising: (8) LiFePO₄ (LFP) and 10 wt% carbon black (CB) (comparative); (9) LFP and 5 wt% graphene (CC-GO2000) and 5 wt% CB; and (10) LFP and 5 wt% graphene (XG300) and 5 wt% CB.

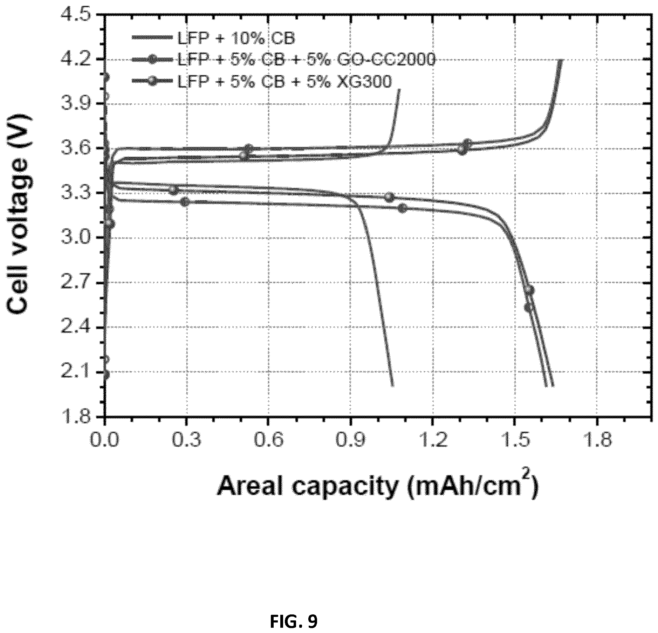

Figure 9: In order to further prove the general applicability of the prenset invention, the experiments as per figures 2 and 6 were reproduced using LiFePO₄ (LFP), an active material showing olivine structure, instead of LNMO or LMO, active materials both having spinel structure. Accordingly, Figure 9 represents the cell voltage (V) vs. the areal capacity (mAh/cm²) of three different electrode formulations comprising: (8) LiFePO₄ (LFP) and 10 wt% carbon black (CB) (comparative); (9) LFP and 5 wt% graphene (CC-GO2000) and 5 wt% CB; and (10) LFP and 5 wt% graphene (XG300) and 5 wt% CB registered at 0.2C rate (34mA/g).

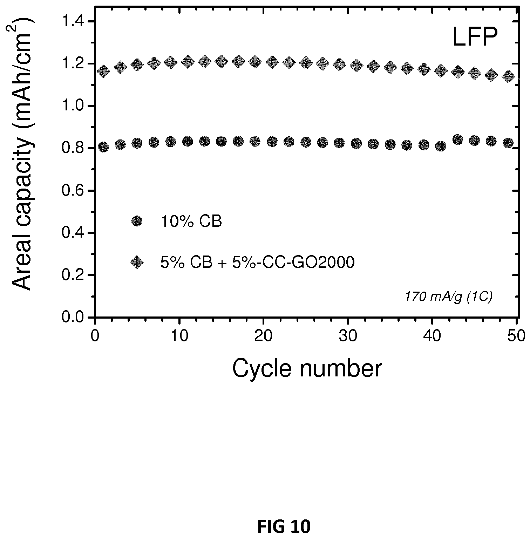

Figure 10: In order to prove the general applicability of the prenset invention, the experiments as per figures 3 and 7 were reproduced using LiFePO₄ (LFP), an active material showing olivine structure, instead of LNMO or LMO, active materials both having spinel structure. Accordingly, Figure 10 shows the comparative evolution of areal capacity (mAh/cm²) vs. cycle number for Lithium half-cells using two different cathode composites, with and without graphene, e.g.: (8) LiFePO₄ (LFP) and 10 wt% carbon black (CB) (comparative) and; (9) LFP and 5 wt% graphene (CC-GO2000) and 5 wt% carbon black registered at 1C rate,

### DESCRIPTION OF THE INVENTION

In a first aspect the present invention relates to an electrode composite, comprising:
4 wt% to 8 wt% graphene
4 wt% to 8 wt% carbon black
4 wt% to 18 wt% binder
the rest being a lithium transition metal oxide having a spinel structure or a lithium transition metal compound having olivine structure, and presenting a thickness above 80 µm and an active mass loading above 7 mg/cm².

The electrode composite of the invention present excellent areal capacities. According to an embodiment of the invention the areal capacities of the electrode composites of the invention is at least 0.5 mAh/cm² preferably above 0.8 mAh/cm² at 0.2C rate. In an embodiment of the invention, they have an areal capacity between 0.5 and 6 mAh/cm² at 0.2C rate, preferably between 0.8 and 5 (mAh/cm²) at 0.2C rate when measured as described below in the section "Electrochemical measurements".

The improved properties of the electrode composites of the invention are also reflected in an unusually high loading of active material (active mass loading). According to an embodiment of the invention, the electrode composite of the invention presents an active mass loading above 7 mg/cm², preferably above 8 mg/cm², more preferably above 10 mg/cm² when measured as described below in the section "Electrochemical measurements". According to an alternative embodiment, the electrode composite of the invention presents an active mass loading between 7 and 30 mg/cm², preferably between 8 and 25 mg/cm², preferably between 8 and 20 mg/cm² when measured as described below in the section "Electrochemical measurements".

According to a further embodiment of the invention the electrode compositions of the invention have an areal capacity between 0.5 and 6 mAh/cm² at 0.2C rate and an active mass loading between 4 and 50 mg/cm², preferably an areal capacity between 0.8 and 5 mAh/cm² at 0.2C rate and an active mass loading between 6 and 40 mg/cm².

The graphene of the electrode composite of the invention can be any one without limitation. Graphene can be obtained from commercially available sources. According to a particular embodiment the graphene are nanoplatelets which are commercially available such as XG300 and XG750 from XG Science. The graphene can also be obtained from different sources by different methods known in the art. Thus, in a particular embodiment the graphene is obtained by separation of graphene sheets, for example by exfoliation. In another particular embodiment graphene is prepared by subjecting graphite or carbon fiber material to acidic conditions, like sulfuric or nitric acid, followed by shearing processes like milling, exfoliation, sonication, and reduction etc. In a further particular embodiment the graphene is obtained from coke according to known methods. The cokes that can be used as starting materials can be of any origin without any particular limitation. In a particular embodiment cokes are obtained from fuel residues, and have different chemical compositions and different microcrystalline structures depending on their origin. According to a preferred embodiment the cokes used are treated coke, recarburation coke or combustible coke (abbreviated CC), and more preferably combustible coke.

According to a particular embodiment coke is first graphitized at a temperature comprised between 2800 °C and 3000 °C, the graphite is then submitted to an acid treatment for oxidation, (Hummers type method) rendering graphite oxide, which is exfoliated at 200 °C and then reduced at temperatures of about 700 °C to 2000 °C, like for example 700 °C, 1000 °C, 1400 °C or 2000 °C. In a still more preferred embodiment the graphene used is obtained according to this method from CC by heat treating the exfoliated graphite oxide at 700°C, followed by a second treatment at a temperature of 2000 °C and is further referred to in this invention as CC-GO2000 hereinafter. In a preferred embodiment the graphene used is obtained according to this method from CC by heat treating the exfoliated graphite oxide at 700°C, followed by a second treatment at a temperature of 1000 °C and is further referred to in this invention as CC-GO1000.

The electrode composite of the invention comprises graphene in an amount from 4 wt% to 8 wt%, preferably 5 wt% relative to the total weight of the electrode composite.

The carbon black used in the present invention can be obtained from diverse commercial sources. In a particular embodiment carbon black is Super P™, available for example from TIMREX.

The electrode composite material of the invention comprises carbon black in an amount from 4 wt% to 8 wt%, preferably 5 wt% relative to the total weight of the electrode composite material.

The electrode composite of the invention comprises a binder to improve the mechanical properties of the composite material.

The electrode composite of the invention comprises a binder in amount from 4 wt% to 18 wt%, preferably from 6 wt% to 16 wt%, more preferably from 8 wt% to 14 wt%, even more preferably from 10 wt% to 13 wt%, and most preferably 12 wt% relative to the total weight of the electrode composite material.

The binder can be one or more selected from the group consisting of fluorinated polymers such as poly(vinyldifluoroethylene) (PVDF), poly(vinyldifluoroethylene-co-hexafluoropropylene) (PVDF-HFP), poly(tetrafluoroethylene) (PTFE), polyimides, and water- soluble binders such as poly(ethylene) oxide, polyvinyl-alcohol (PVA), cellulose, carboxymethylcellulose (CMC), starch, hydroxypropylcellulose, regenerated cellulose, polyvinyl pyrrolidone (PVP), polyethylene, polypropylene, ethylene-propylene- diene terpolymer (EPDM), sulfonated EPDM, styrene-butadiene rubber (SBR), and fluoro rubber, and copolymers and mixtures thereof. In a particularly preferred embodiment PVDF is used.

According to an embodiment of the invention, the lithium transition metal oxide has a spinel structure. For the electrode composite of the invention, in a particular embodiment the lithium transition metal oxide having a spinel structure presents the following formula (I),

LiₓMn_{2-y-z}M1_{y}M2_{z}O₄₋ₙXₙ

wherein 0.9≤x≤1.15, 0≤y≤0.2, 0≤z≤0.15 and 0≤n≤1;

M1 and M2 represent one or more elements selected from the group consisting of titanium (Ti), vanadium (V), chrome (Cr), cobalt (Co), iron (Fe), cooper (Cu), zinc (Zn), aluminum (Al), silicon (Si), gallium (Ga), zirconium (Zr), niobium (Nb), molybdenum (Mo), tungsten (W), barium (Ba), calcium (Ca), strontium (Sr), lanthanum (La), cerium (Ce), silver (Ag), tantalum (Ta), hafnium (Hf), ruthenium (Ru), bismuth (Bi), antimony (Sb), tin (Sn), and arsenic (As); and
X represents one or more elements selected from the group consisting of fluorine (F), chlorine (CI), bromine (Br), and iodine (I).

In another particular embodiment the lithium transition metal oxide having a spinel structure presents the following formula (II),

LiₓMn_{1.5}Ni_{0.5-y}M_{y}O₄₋ₙXₙ

wherein 0.9≤x≤1.1, 0≤y≤0.3, and 0≤n≤1;

M represents one element or more elements selected from the group consisting of titanium (Ti), vanadium (V), chrome (Cr), cobalt (Co), iron (Fe), cooper (Cu), zinc (Zn), aluminum (Al), silicon (Si), gallium (Ga), zirconium (Zr), niobium (Nb), molybdenum (Mo), tungsten (W), barium (Ba), calcium (Ca), strontium (Sr), lanthanum (La), cerium (Ce), silver (Ag), tantalum (Ta), hafnium (Hf), ruthenium (Ru), bismuth (Bi), antimony (Sb), tin (Sn), and arsenic (As); and
X represents one or more elements selected from the group consisting of fluorine (F), chlorine (CI), bromine (Br), and iodine (I).

In another particular embodiment the lithium transition metal oxide having a spinel structure presents the following formula (III),

LiₓMn_{1.5-y}Ni_{0.5-y}M_{2y}O₄₋ₙXₙ

wherein 0.9≤x≤1.1, 0≤y≤0.2, and 0≤n≤1;
M represents one element or more elements selected from the group consisting of titanium (Ti), vanadium (V), chrome (Cr), cobalt (Co), iron (Fe), cooper (Cu), zinc (Zn), aluminum (Al), silicon (Si), gallium (Ga), zirconium (Zr), niobium (Nb), molybdenum (Mo), tungsten (W), barium (Ba), calcium (Ca), strontium (Sr), lanthanum (La), cerium (Ce), silver (Ag), tantalum (Ta), hafnium (Hf), ruthenium (Ru), bismuth (Bi), antimony (Sb), tin
(Sn), and arsenic (As); and
X represents one or more elements selected from the group consisting of fluorine (F), chlorine (CI), bromine (Br), and iodine (I).

In a further particular embodiment the lithium transition metal oxide having a spinel structure presents the following formula (IV):

LiₓMn_{1.5-y}Ni_{0.5-z}M_{y+z}O₄₋ₙXₙ

wherein 0≤y≤0.2, 0≤z≤0.3, and 0≤n≤1;
M represents one or more elements selected from the group consisting of titanium (Ti), vanadium (V), chrome (Cr), cobalt (Co), iron (Fe), cooper (Cu), zinc (Zn), aluminum (Al), silicon (Si), gallium (Ga), zirconium (Zr), niobium (Nb), molybdenum (Mo), tungsten (W), barium (Ba), calcium (Ca), strontium (Sr), lanthanum (La), cerium (Ce), silver (Ag), tantalum (Ta), hafnium (Hf), ruthenium (Ru), bismuth (Bi), antimony (Sb), tin (Sn), and arsenic (As); and
X represents one or more elements selected from the group consisting of fluorine (F), chlorine (CI), bromine (Br), and iodine (I).

According to a further embodiment, the lithium transition metal oxide having a spinel structure presents the following formula (V):

LiₓMn_{2-y}Ni_{y}O₄₋ₙXₙ

wherein 0≤y≤0.5, and 0≤n≤1; and
X represents one or more elements selected from the group consisting of fluorine (F), chlorine (CI), bromine (Br), and iodine (I).

According to a preferred embodiment, the lithium transition metal oxide having a spinel structure is selected from the group of the formula (I) LiₓMn_{2-y-z}M1_{y}M2_{z}O₄₋ₙXₙ with 0.9≤x≤1.15, 0≤y≤0.2, 0≤z≤0.15 and 0≤n≤1;
more preferably with 0.95≤x≤1.12, 0≤y≤0.15, 0≤z≤0.1 and 0≤n≤0.5;
even more preferably with 1≤x≤1.10, 0≤y≤0.07, 0≤z≤0.05 and 0≤n≤0.2;
and most preferably Li_{1.08}Mn_{1.92}O₄, hereinafter also referred to as LMO.

According to another preferred embodiment the lithium transition metal oxide having a spinel structure is selected from the group of the formula (II) LiₓMn_{1.5}Ni_{0.5-y}M_{y}O₄₋ₙXₙ with 0≤y≤0.2, and 0≤n≤1;
more preferably with 0.97≤x≤1.07, 0≤y≤0.15, and 0≤n≤0.5,
even more preferably with 1 ≤x≤1.03, 0≤y≤0.1, and 0≤n≤0.2,
and most preferably LiNi_{0.5}Mn_{1.5}O₄, hereinafter also referred to as LNMO.

According to a further preferred embodiment the lithium transition metal oxide having a spinel structure is selected from the group of the formula (III) LiₓMn_{1.5-y}Ni_{0.5-y}M_{2y}O₄₋ₙXₙ with 0≤y≤0.2, and 0≤n≤1;
more preferably with 0.97≤x≤1.07, 0≤y≤0.1, and 0≤n≤0.5,
even more preferably with 1 ≤x≤1.03, 0≤y≤0.07, and 0≤n≤0.2,
and most preferably LiCr_{0.1}Ni_{0.45}Mn_{1.45}O₄, hereinafter also referred to as LCrNMO.

In a further embodiment of the invention, the lithium transition metal compound has a olivine structure. According to an embodiment of the invention the coated and uncoated lithium transition metal compound presents the following formula (VI):

LiₓFe_{1-y}M_{y}(PO₄₋ₙ)Xₙ

wherein 0≤y≤0.5, and 0≤n≤1;
M represents one or more elements selected from the group consisting of titanium (Ti), aluminum (Al), nickel (Ni), cobalt (Co), niobium (Nb) and Magnesium (Mg); and
X represents one or more elements selected from the group consisting of fluorine (F), chlorine (CI), bromine (Br), and iodine (I), sulfur (S) and nitrogen (N).

In a further embodiment the electrode composite of the invention presents a thickness from 100 µm to 210 µm, and even more preferably from 120 µm to 180 µm (14 - 20 mg/cm² of active mass loading). The electrode composites of the invention can achieve high thickness with high active mass loading without showing imperfections such as fractures or detachments from the current collector and are thus especially appropriate for applications in electric storage, providing high gravimetric capacities and energies.

According to a preferred embodiment the electrode composite of the invention comprises 78 wt% of LNMO, 5 wt% graphene, 5 wt% carbon black and 12 wt% PVDF. According to the results shown below in Tables 1 and 2, this electrode composite is characterized by high thickness, high active mass loading, high voltage (higher than 4.6 V), and high specific capacity and high specific energy.

All of the particular, preferred, more preferred, still more preferred and most preferred ranges and values above mentioned are to be considered disclosed herein in all their possible combinations.

In the present application the following terminology has been used to define the electrode composite materials of the invention: first the lithium transition metal oxide having a spinel structure is indicated in an abbreviated form like LNMO for LiNi_{0.5}Mn_{1.5}O₄, then the type of graphene used is indicated in an abbreviated form, like for example XG300 or XG750 for nanoplatelets from XG Science, or CC-GO1000 or CC-GO2000 for the graphene obtained from CC coke as above explained.

In Figure 1 the active mass loading (mg/cm²) of the electrode composite vs. the composite electrode thickness (µm) of four different electrode composites is shown. One of the electrode composites is according to the state of the art for comparative purposes and the other three are according to the present invention. All four comprise 78 wt% LNMO and 12 wt% PVDF, the same total amount of conductive material, 10 wt%, and differ only in the type of conductive additive. Thus, formulation (1) has 10 wt% CB; formulation (2) has 5 wt% CB and 5 wt% CC-GO1000; formulation (3) has 5 wt% CB and 5 wt% CC-GO2000; and formulation (4) has 5 wt% CB and 5 wt% XG300. It was observed that electrode composites with CB as only conductive additive could not be made with thicknesses higher than approximately 80 µm, without evident fractures, and other defects in them, which rendered them useless for preparing high energy electrodes, and even thinner configurations presented lower quality. However, with the same amount of a combination of graphene and CB according to the invention it was possible to manufacture electrode composites completely homogenous without any visible lumps, or micro-fractures of high thicknesses and high active mass loading. For each of the formulations (2), (3) and (4), between 10 and 20 electrode composites of different thicknesses were prepared with similar results, proving the repeatability of their preparation.

The electrochemical data of the four electrode composites shown in Figure 1 are gathered in Tables 1 and 2 below. It is to be noted that whereas the capacity and energy in Table 1 are referred to the electrode surface area, the electrochemical data in Table 2 have been normalized, for comparative purpose, to the total mass of the electrode composite plus aluminum current collector.
Data gathered in these Tables 1 and 2 were measured at the moderate current of 0.2C (30 mA/g) to determine the nominal values of the electrochemical parameters and at the higher current of 1C (147 mA/g) to obtain information concerning the power response of the electrode composites of the invention.
The comparison between the four electrode composites show that their respective active mass loading significantly increased from about 7.4 mg/cm² for the electrode composite with only CB as conductive additive, to about double (13.4, 14.8, 16.2) for formulations (2), (3) and (4) with carbon black and different types of graphene. As already mentioned the present invention achieves thick electrode composites including graphene with the same conductive additive percentage, 10 wt%, without the appearance of fractures, or lumps and showing good adhesion to the aluminium current collector.
The comparison of the data shown in Table 1 and 2 of specific capacity (mAh/cm² and mAh/g-total) and specific energy (mWh/cm² and Wh/kg-total) demonstrate the improved electrochemical performance of the electrode composites of the invention in terms of higher areal capacity and energy (mAh/cm² and mWh/cm², respectively) and higher specific capacity and energy (mAh/g-total and Wh/kg-total, respectively) which constitutes an important and competitive advantage.

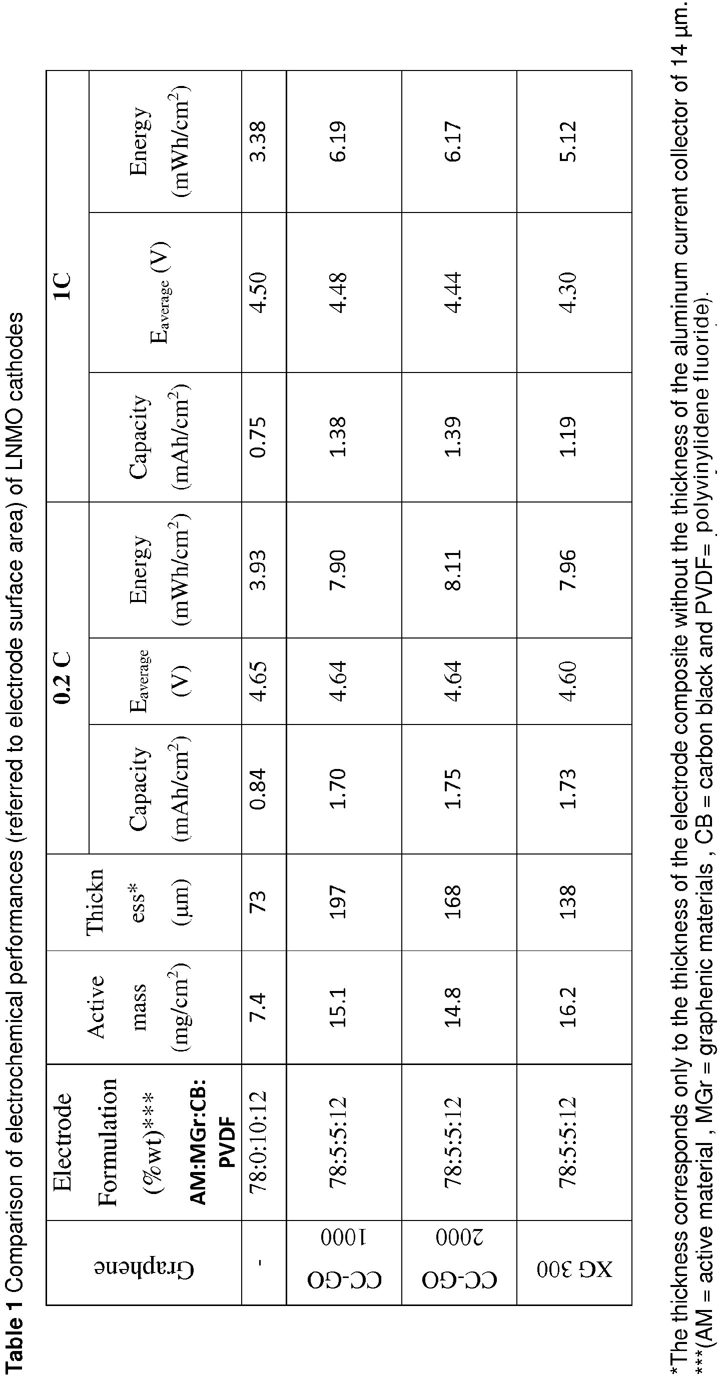

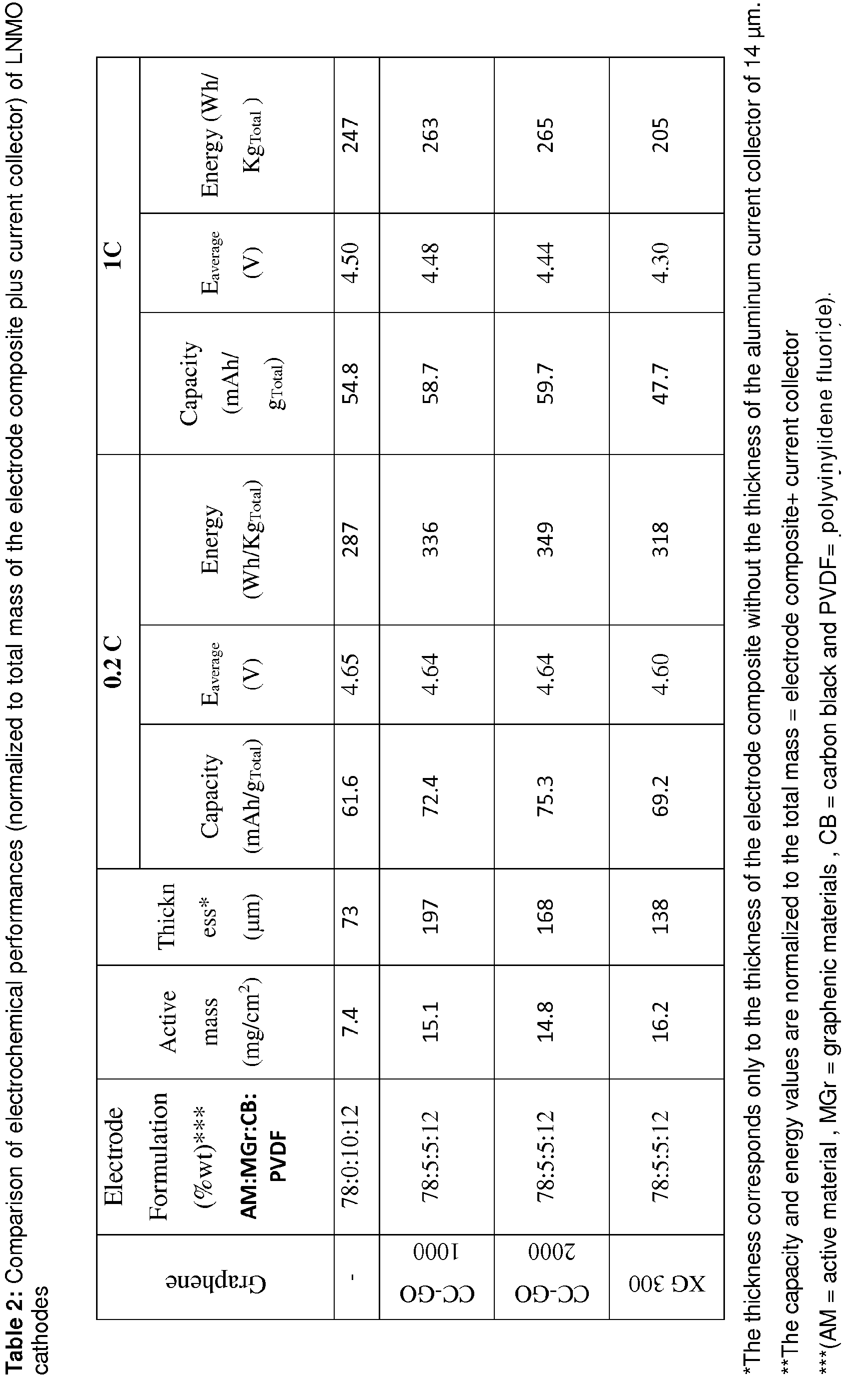

The results also indicate that the electrode composites of the invention are capable of working at high average potentials greater than 3V, preferably greater than 3.5V, more preferably greater than 4V, even still more preferably greater than 4.3 V. and still more preferably greater than 4.6V.

In Figure 2 the cell voltage (V) vs. the areal capacity (mAh/cm²) of four different electrode composites has been represented, showing their charge/discharge curves, which were registered at a moderate current (0.2C). The electrode composites were, as in Figure 1, manufactured with 78 wt% LNMO and 12 wt% PVDF, and in formulation (1) 10 wt% CB with 7.4 mg/cm² active material; in formulation (2) 5 wt% graphene CC-GO1000 and 5 wt% CB with 15.1 mg/cm² active material; in formulation (3) 5 wt% graphene CC-GO2000 and 5 wt% CB with 14.8 mg/cm² active material and in formulation (4) 5 wt% graphene XG300 and 5 wt% CB with 16.2 mg/cm² active material. These curves also demonstrate the improved electrochemical performances of the electrode composites of the invention with graphene and carbon black compared to the electrode composites of the state of the art, due to their higher thicknesses, higher active material loading and consequently higher specific capacity and energy (mAh/g-total and Wh/kg-total) and more higher areal capacity and energy (mAh/cm² and mWh/cm²).

The same experiments were reproduced using further spinel and olivine based active materials. The results are shown in figures 5, 6 and 8, 9, and Tables 3-6, as further discussed in the following.

In the case of further spinels, the general applicability of the present invention was further proved reproducing the tests with LiMn₂O₄ (LMO) instead of LNMO. In Figure 5 the active mass loading (mg/cm²) of the electrode composite vs. the composite electrode thickness (µm) of three different electrode composites is shown. One of the electrode composites is according to the state of the art for comparative purposes and the other two are according to the present invention. All three comprise 78 wt% LMO and 12 wt% PVDF, the same total amount of conductive material, 10 wt%, and differ only in the type of conductive additive. Thus, (5) has 10 wt% CB; (6) has 5 wt% CB and 5 wt% CC-GO2000;and (7) has 5 wt% CB and 5 wt% XG300. As in the case of LNMO, it was observed that electrode composites with CB as only conductive additive could not be made with thicknesses higher than approximately 80 µm, without evident fractures, and other defects in them, which rendered them useless for preparing high energy electrodes. However, with the same amount of a combination of graphene and CB according to the invention it was possible to manufacture electrode composites without any visible lumps,or micro-fractures, good adherence to the current collector, high thicknesses and high active mass loading.

The electrochemical data of the three electrode composites shown in Figure 5 are gathered in Tables 3 and 4 below. It is to be noted that whereas the capacity and energy in Table 3 are referred to the electrode surface area, the electrochemical data in Table 4 have been normalized, for comparative purpose, to the total mass of the electrode composite plus aluminum current collector.
Data gathered in these Tables 3 and 4 were measured at the moderate current of 0.2C (30 mA/g) to determine the nominal values of the electrochemical parameters and at the higher current of 1C (148 mA/g) to obtain information concerning the power response of the electrode composites of the invention.
The comparison between the three electrode composites show that their respective active mass load significantly increased from about 9.5 mg/cm² for the electrode composite with only CB as conductive additive (formulation (5)), to about double (18.9 and 18.0) for formulations (6) and (7) with carbon black and different types of graphene. As already mentioned the present invention achieves thick electrode composites including graphene with the same conductive additive percentage, 10 wt%, without the appearance of fractures, or lumps and with good adherence to the current collector. Thus, analogous results were obtained for LMO.
The comparison of the data shown in Table 3 and 4 of specific capacity (mAh/cm² and mAh/g-total) and specific energy (mWh/cm² and Wh/kg-total) again demonstrate the improved electrochemical performance of the electrode composites of the invention in terms of higher areal capacity and energy (mAh/cm² and mWh/cm², respectively) and higher specific capacity and energy (mAh/g-total and Wh/kg-total, respectively) which constitutes an important and competitive advantage.
In Figure 6 the cell voltage (V) vs. the areal capacity (mAh/cm²) of three different electrode composites has been represented, showing their charge/discharge curves, which were registered at a moderate current (0.2C). The electrode composites were, as in Figure 5, manufactured with 78 wt% LMO and 12 wt% PVDF, the same total amount of conductive material, 10 wt%, and differ only in the type of conductive additive. Thus, formulation (5) has 10 wt% CB with 9.5 mg/cm²; formulation (6) has 5 wt% CB and 5 wt% CC-GO2000 with 18.9 mg/cm²; and formulation (7) has 5 wt% CB and 5 wt% XG300 with 18.0 mg/cm². These curves also demonstrate the improved electrochemical performances of the electrode composites of the invention with graphene and carbon black compared to the electrode composites of the state of the art, due to their higher thicknesses, higher active mass loading and consequently higher specific capacity and energy (mAh/g-total and Wh/kg-total) and more higher areal capacity and energy (mAh/cm² and mWh/cm²).

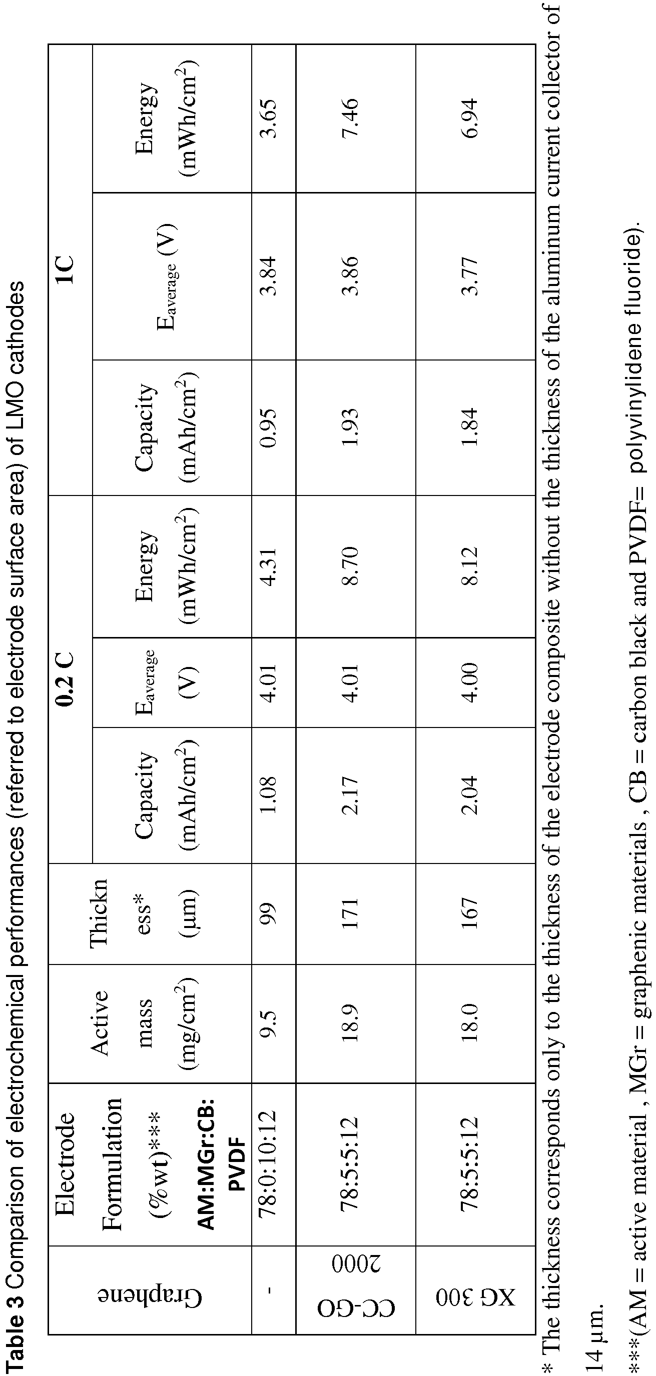

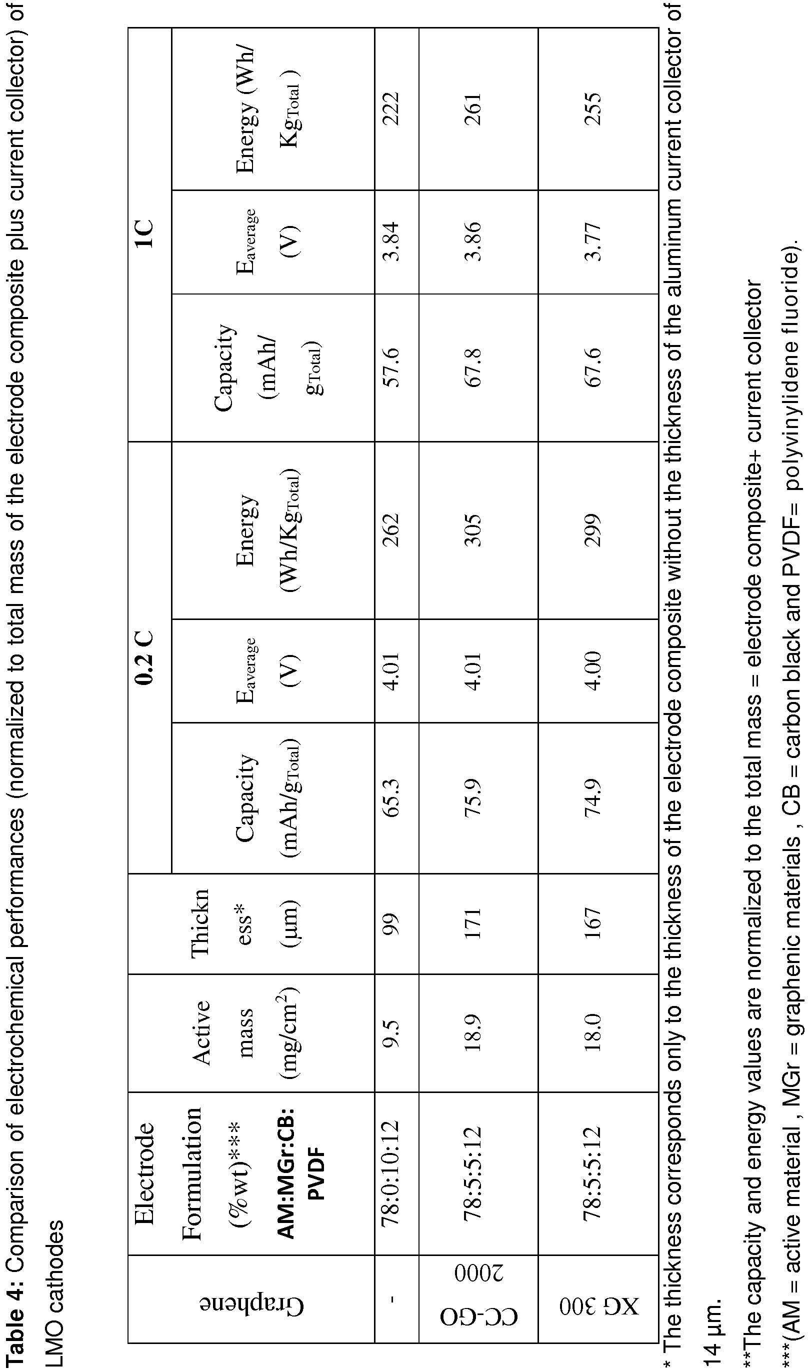

Thus, according to an embodiment of the invention, the electrode composite of the invention comprises a lithium transition metal oxide having a spinel structure with an active mass loading between 8 and 40 mg/cm², preferably between 9 and 30 mg/cm², more preferably between 10 and 25 mg/cm². According to an embodiment of the invention the Energy normalized to the total mass of the electrode composite comprising a lithium transition metal oxide having a spinel structure plus the additives and plus the mass of current collector (typically made of aluminium) is above 290 Wh/Kg_{Total} at 0.2C rate, wherein Kg_{Total} is the mass of electrode composite plus aluminium current collector. Preferably, such normalized Energy is above 300 Wh/Kg_{Total} at 0.2C rate. According to a further embodiment, said normalized Energy is comprised between 290 and 500 Wh/Kg_{Total} at 0.2C rate, preferably, between 290 and 400 Wh/Kg_{Total} at 0.2C rate. According to an embodiment of the invention the areal capacities of the electrode composites of the invention comprising a lithium transition metal oxide having spinel structure is at least 1 mAh/cm² at 0.2C rate, preferably between 1.2 and 2.5 mAh/cm² at 0.2C rate, more preferably between 1.5 and 2.5 mAh/cm² at 0.2C rate when measured as described below in the section "Electrochemical measurements".

The general applicability is further proved by use of an olivine as active material. In Figure 8 the active mass loading (mg/cm²) of the electrode composite vs. the composite electrode thickness (µm) of three different electrode composites is shown. One of the electrode composites is according to the state of the art for comparative purposes and the other two are according to the present invention. All three comprise 78 wt% LiFePO₄ (LFP) and 12 wt% PVDF, the same total amount of conductive material, 10 wt%, and differ only in the type of conductive additive. Thus, formulation (8) has 10 wt% CB with 7.7 mg/cm2; formulation (9) has 5 wt% CB and 5 wt% CC-GO2000 with 11.7 mg/cm²; and formulation (10) has 5 wt% CB and 5 wt% XG300 with 11.7 mg/cm². As in the case of LNMO and LMO, it was observed that electrode composites with CB as only conductive additive could not be made with thicknesses higher than approximately 80 µm, without evident fractures, and other defects in them, which rendered them useless for preparing high energy electrodes. However, with the same amount of a combination of graphene and CB according to the invention it was possible to manufacture electrode composites completely homogenous without any visible lumps, or micro-fractures, with good adherence to the current collector, high thicknesses and high active mass loading.

The electrochemical data of the three electrode composites shown in Figure 8 are gathered in Tables 5 and 6 below. It is to be noted again that whereas the capacity and energy in Table 5 are referred to the electrode surface area, the electrochemical data in Table 6 have been normalized, for comparative purpose, to the total mass of the electrode composite plus aluminum current collector.
Data gathered in these Tables 5 and 6 were measured at the moderate current of 0.2C (30 mA/g) to determine the nominal values of the electrochemical parameters and at the higher current of 1C (170 mA/g) to obtain information concerning the power response of the electrode composites of the invention.
The comparison between the three electrode composites show that their respective active mass loading significantly increased once more from about 7.7 mg/cm² for the electrode composite with only CB as conductive additive (formulation (8)), to 11.7 for formulations (9) and (10) with carbon black and different types of graphene. Thus, according to an embodiment of the invention, the electrode composite of the invention comprises a lithium transition metal compound having olivine structure with an active mass loading between 6 and 35 mg/cm², preferably between 6 and 20 mg/cm², more preferably between 7 and 20 mg/cm². As already mentioned the present invention achieves thick electrode composites including graphene with the same conductive additive percentage, 10 wt%, without the appearance of fractures, or lumps. Thus, analogous results were obtained for LFP.
The comparison of the data shown in Table 5 and 6 of specific capacity (mAh/cm² and mAh/g-total) and specific energy (mWh/cm² and Wh/kg-total) again demonstrate the improved electrochemical performance of the electrode composites of the invention in terms of higher areal capacity and energy (mAh/cm² and mWh/cm², respectively) and higher specific capacity and energy (mAh/g-total and Wh/kg-total, respectively) which constitutes an important and competitive advantage. According to an embodiment of the invention the Energy normalized to the total mass of the electrode composite comprising a lithium transition metal compound having an olivine structure plus the additives, and plus the mass of current collector (typically made of aluminium) is above 250 Wh/Kg_{Total} at 0.2C rate, wherein Kg_{Total} is the mass of electrode composite plus aluminium current collector. Preferably, such normalized Energy is above 260 Wh/Kg_{Total} at 0.2C rate. According to a further embodiment, said normalized Energy is comprised between 250 and 500 Wh/Kg_{Total} at 0.2C rate, preferably, between 290 and 350 Wh/Kg_{Total} at 0.2C rate.

In Figure 9 the cell voltage (V) vs. the areal capacity (mAh/cm²) of three different electrode composites has been represented, showing their charge/discharge curves, which were registered at a moderate current (0.2C). The electrode composites were, as in Figure 8, manufactured with 78 wt% LFP and 12 wt% PVDF, the same total amount of conductive material, 10 wt%, and differ only in the type of conductive additive. Thus, (8) has 10 wt% CB; (9) has 5 wt% CB and 5 wt% CC-GO2000;and (10) has 5 wt% CB and 5 wt% XG300. These curves also demonstrate the improved electrochemical performances of the electrode composites of the invention with graphene and carbon black compared to the electrode composites of the state of the art, due to their higher thicknesses, higher active mass loading and consequently higher specific capacity and energy (mAh/g-total and Wh/kg-total) and more higher areal capacity and energy (mAh/cm² and mWh/cm²).

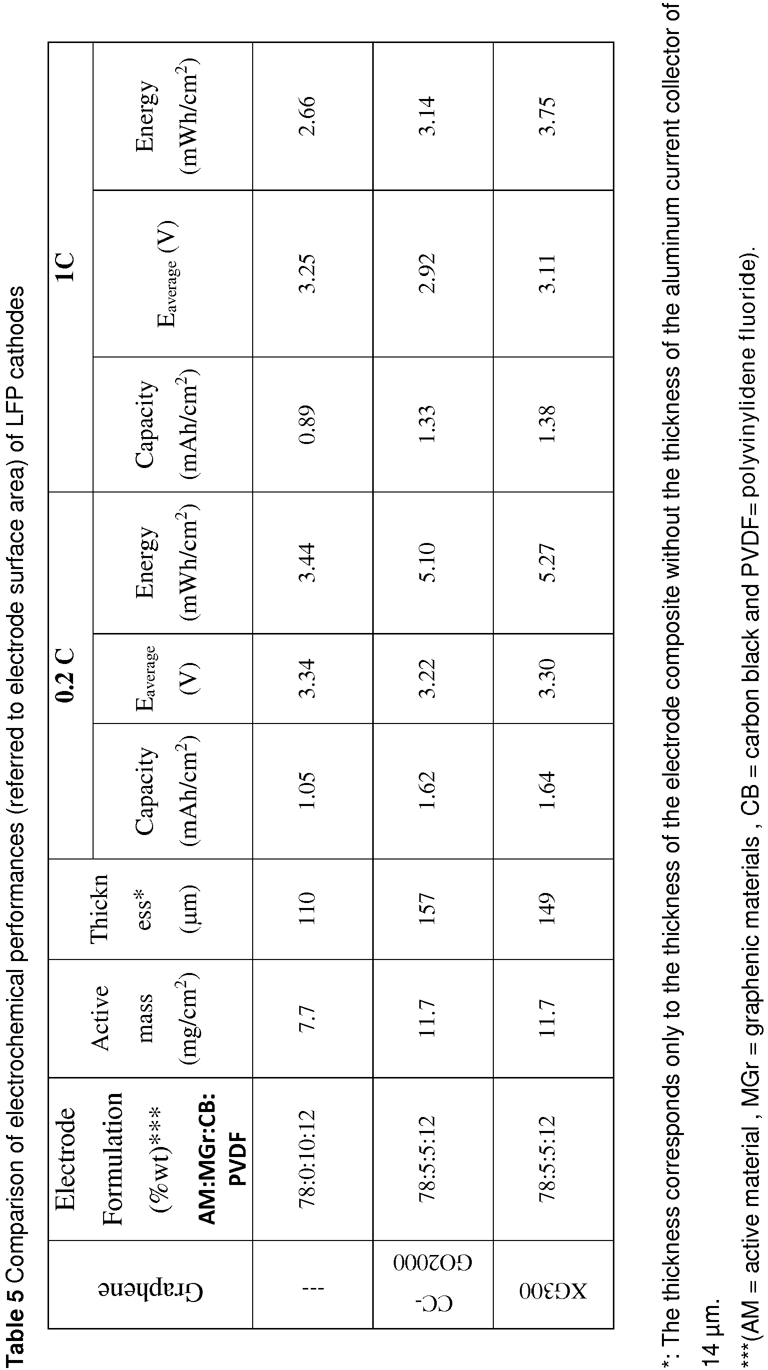

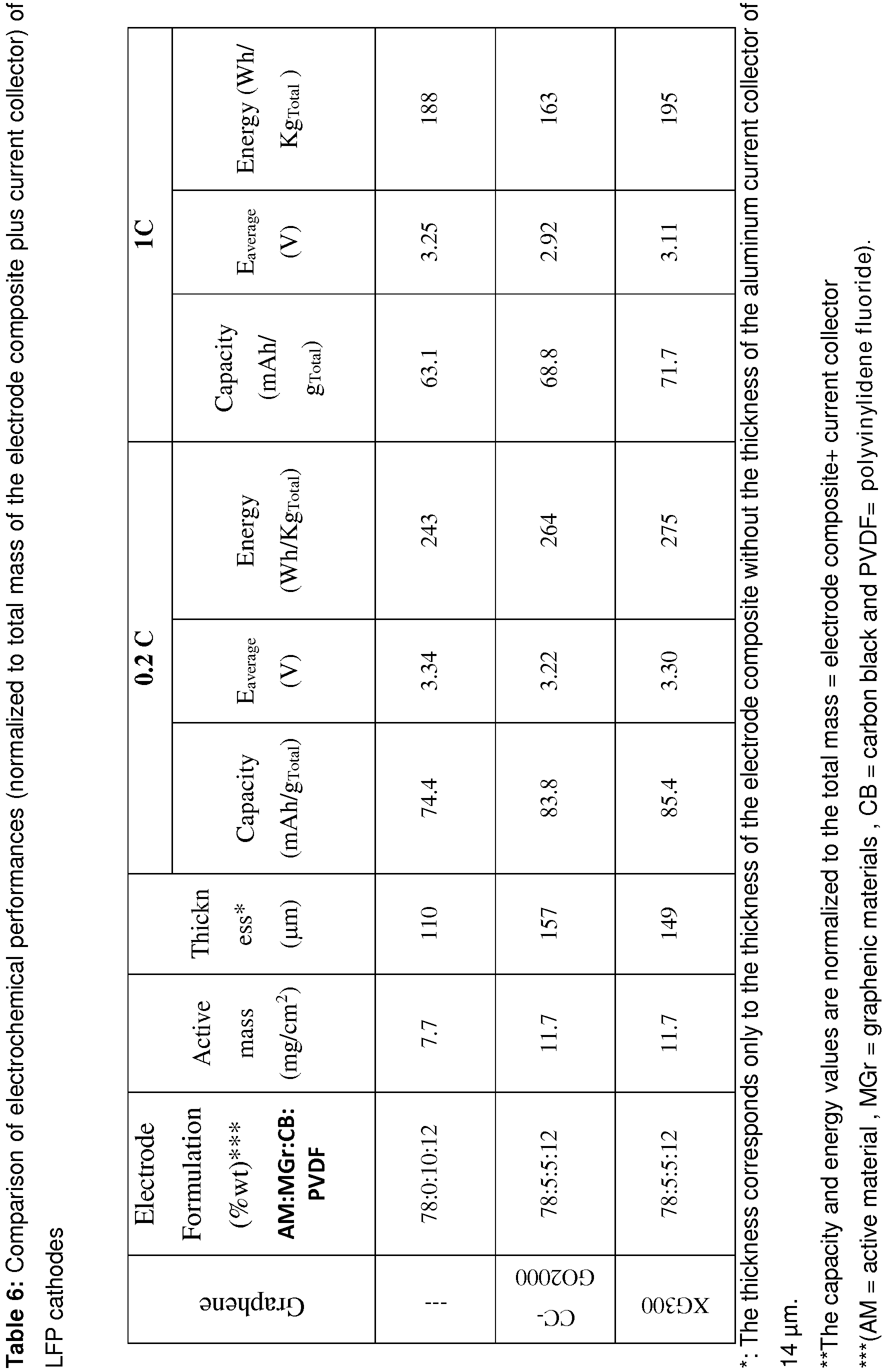

That the electrode composites of the invention can be used as cathode in a rechargeable lithium ion battery can be further seen from the data shown in Figure 3 where the evolution of the areal capacity (mAh/cm²) against the cycle numbers of charge/discharge carried out is represented and also compared with an electrode composite of the state of the art. In this particular case, shown in Figure 3, 50 cycles were carried out at 1C rate. The analysis of these data demonstrate that two different electrode composites, one according to the state of the art (composite (1)) with 10 wt% carbon black (CB) and one according to the present invention (composite (3)) containing 5 wt% carbon black (CB) and 5 wt% graphene CC-GO2000 show both, high cyclability. In fact, their respective areal capacities do not diminish substantially after 50 cycles. Again, it can be seen that the areal capacity of the electrode composite of the present invention is larger than those according to the state of the art. These results clearly show that the electrode composite material of the invention can be used for lithium ion battery cathodes since their capacity remains almost constant on cycling

The same experiments were reproduced using further spinel and olivine based active materials. The results are shown in figures 7 and 10, as further discussed in the following.

The general applicability of the electrode composites of the invention as cathodes in a rechargeable lithium ion battery can be further seen from the data shown in Figure 7. where the evolution of the areal capacity (mAh/cm²) for LMO against the cycle numbers of charge/discharge carried out is represented and also compared with an electrode composite of the state of the art. In this particular case, shown in Figure 7, 50 cycles were carried out at 1C rate. The analysis of these data demonstrate that two different electrode composites, one according to the state of the art (composite (5)) with 10 wt% carbon black (CB) and one according to the present invention (composite (6)) containing 5 wt% carbon black (CB) and 5 wt% graphene CC-GO2000 show both, high cyclability. In fact, their respective areal capacities do not diminish substantially after 50 cycles. Again, it can be seen that the areal capacity of the electrode composite of the present invention is larger than those according to the state of the art. These results clearly show that the LMO electrode composite material of the invention can be used for lithium ion battery cathodes since their capacity remains almost constant on cycling

In the case of further olivines, the general applicability of the electrode composites of the invention as cathodes in a rechargeable lithium ion battery can be further seen from the data shown in Figure 10. where the evolution of the areal capacity (mAh/cm²) for LFP against the cycle numbers of charge/discharge carried out is represented and also compared with an electrode composite of the state of the art. In this particular case, shown in Figure 10, 50 cycles were carried out at 1C rate. The analysis of these data demonstrate that two different electrode composites, one according to the state of the art (composite (8)) with 10 wt% carbon black (CB) and one according to the present invention (composite (9)) containing 5 wt% carbon black (CB) and 5 wt% graphene CC-GO2000 show both, high cyclability. In fact, their respective areal capacities do not diminish substantially after 50 cycles. Again, it can be seen that the areal capacity of the electrode composite of the present invention is larger than those according to the state of the art. These results clearly show that the LFP electrode composite material of the invention can be used for lithium ion battery cathodes since their capacity remains almost constant on cycling

The present inventors have also shown that when electrode composites are manufactured comprising only graphene in similar amounts, their electrochemical performance is not satisfactory either. Electrode composites comprising LNMO and graphene as the only conductive additive were prepared and studied. For this study different graphenes (commercially available XG300 and XG750 nanoplatelets from XG Science) in different proportions (10 wt% and 15 wt%) were used. In particular, the following three electrode composite with LNMO and graphene were prepared: (11) 15wt% of XG300; (12) 15wt% of XG750 and (13) 10wt% of XG300. Lithium cells were assembled for this study as explained in the Examples, with cathodes comprising these electrode composites deposited on an aluminum current collector. The cells were cycled at a moderate current of 0.2C (30mA/g).

In Figure 4 the cell voltage (V) vs. the discharge capacity (mAh/g) is represented and the obtained charge/discharge curves registered during cycling are shown. From Figure 4 it can be seen that the electrochemical response extremely depends on the formulation of the electrode composites. Despite using a moderate current (0.2C), cathodes with electrode composites (12) and (13) have practically no discharge capacity, and cathode with (11) shows how its discharge capacity is better, but rapidly diminishes in about 15% after only 5 cycles. It can be thus concluded that the use of graphene as the only conductive additive does not allow the manufacturing of cathodes with satisfactory electrochemical performance.

From the curves represented in Figure 4 the electrochemical parameters shown in the following Table 7 have been obtained.

**Table 7 : Electrochemical performances (normalized to mass of active material) of LNMO cathodes with several graphenes as unique conductive additive.**

| | LNMO-XG300-10 | LNMO-XG300-15 | LNMO-XG750-15 |
|---|---|---|---|
| Graphene (wt %) | 10 | 15 | 15 |
| Capacity at C/5 (mAh/g) | 1.1 | 102 | 12.4 |
| Average Voltage (V) | ∼4.1 | 4.53 | 4.3 |
| Specific Energy (Wh/kg) | 4.5 | 461 | 53.3 |

The analysis of these data reveals that only the cell assembled with the cathode (11) comprising the spinel LNMO and 15 wt% of XG300 graphene has an acceptable capacity of 102 mAh/g and energy of 461 Wh/kg, although as already mentioned, its cyclability does not fulfill the requirements of a rechargeable lithium ion cell.

The present invention also relates to a cathode comprising a current collector and disposed on the current collector the electrode composite of the invention. The current collector for the cathode of the invention is made of conventional materials, not particularly limited, such as metals like Al, Ag, Ni, Sn or Fe, their alloys, or stainless steel, among others. In a particular embodiment the current collector is made from Al. The current collector is generally a sheet, a film, a layer, with variable thicknesses typically comprised between 3 µm to 500 µm. As it has been indicated, the inventors have observed that the adherence between current collector and electrode composite is very good, even for the greatest thickness achieved.

That the electrode composites of the invention can be used as cathode in a rechargeable lithium ion cell can be seen from Figure 2, 3, 6, 7, 9 and 10 as above mentioned.

Thus in a further aspect the invention relates to a lithium ion battery or cell (LIB) comprising the cathode of the invention. The LIB further comprises an anode, a separator and an electrolyte soaked in the separator. The anode is obtained from any conventional anode active material, which is not particularly limited.

Examples of anode active materials are lithium metal, a metal which forms alloy with lithium, a transition metal compound of general formula MₐX_{b} (wherein M= transition metal, X= O, S, F, P, N) able to act as conversion anode, a composite anode comprising a carbonaceous matrix with one or more transition metal compounds of the formula MₐX_{b}, a material that is used to dope or undope lithium, and a material that enables reversible intercalation and deintercalation of lithium ions.
Examples of the transition metal compounds MₐX_{b} are tungsten oxide, molybdenum oxide, titanium oxide, lithium titanium oxide, lithium silicon nitride and antimony nitride. Examples of materials that are used to dope or undope lithium are silicon (Si), SiOₓ (0<x<2), Si-Q alloy (Q may be an alkali metal, an alkali earth metal, a Group 13 element, a Group 14 element, a transition metal, a rare-earth element, or a combination thereof, and may not be Si), Sn, SnO₂, and Sn-R (R may be an alkali metal, an alkali earth metal, a Group 13 element, a Group 14 element, a transition metal, a rare-earth element, or a combination thereof, and may not be Si), and at least one of these may be used in combination with SiO₂ for use as the anode active material. The elements Q or R may be magnesium (Mg), calcium (Ca), strontium (Sr), barium (Ba), scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), rhenium (Re), iron (Fe), lead (Pb), ruthenium (Ru), osmium (Os), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), titanium (Ti), germanium (Ge), phosphorus (P), arsenic (As), antimony (Sb), bismuth (Bi), sulfur (S), selenium (Se), tellurium (Te), or a combination thereof.

The material that enables reversible intercalation and deintercalation of lithium ions may be any one of various carbonaceous anode active materials that are conventionally used in a lithium battery. Examples of the material that enables reversible intercalation and deintercalation of lithium ions are crystalline carbon, amorphous carbon, and a mixture thereof. Examples of crystalline carbon are plate, flake, spherical, or fiber-type natural graphite, artificial graphite and graphene-based materials; and examples of amorphous carbon are soft carbon (low-temperature calcined carbon), hard carbon, mesophase pitch carbide, and calcined coke.
The anode may further comprise a binder as above disclosed for the electrode composite material of the invention, and a conductive material such as carbon black; graphite particles; natural graphite; artificial graphite; hard carbon; acetylene black; ketjen black; carbon fibers; carbon nanotubes; graphene; powder, fibers, or tubes of copper, nickel, aluminum, or silver; or a conductive polymer such as a polyphenylene derivative, or mixtures thereof.

The LIB of the invention further comprises a separator between anode and cathode presenting electronic insulating property, mechanical strength, chemical resistance and high ion transmittance. The separator may be one or more separators conventionally used in lithium batteries, generally in the form of a film or sheet or the like. Separators are typically made from polymers like polypropylene, polyethylene, glass fiber, polyester, polytetrafluoroethylene (PTFE), and combinations thereof, and these separators may be in a non-woven or woven fabric form.

The LIB of the invention further comprises an electrolyte presenting high Li-ion conductivity, electronic insulating property, and high electrochemical stability. The electrolyte may be an organic electrolyte solution comprising a lithium salt in an organic solvent. The organic solvent may be any one of various organic solvents used in the art. Examples of the organic solvents are propylene carbonate, ethylene carbonate, fluoroethylene carbonate, butylene carbonate, dimethyl carbonate, diethyl carbonate, ethyl methyl carbonate, methyl propyl carbonate, ethylpropyl carbonate, methyl isopropyl carbonate, dipropyl carbonate, dibutyl carbonate, benzonitrile, acetonitrile, tetrahydrofuran, 2-methyltetrahydrofuran, y-butyrolactone, 1,3-dioxolane, 4-methyl-1,3-dioxolane, N,N-dimethyl formamide, dimethylacetamide, dimethylsulfoxide, dioxane, 1,2-dimethoxyethane, sulfolane, dichloroethane, chlorobenzene, nitrobenzene, diethyleneglycol, dimethyl ether, and a mixture thereof.
The lithium salt may be any one of various lithium salts used in the art. Examples of the lithium salt are LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (each of x and y is a natural number), LiCl, Lil, and a mixture thereof.
The electrolyte may also be one of the above mentioned lithium salts dissolved in an ionic liquid. Examples of ionic liquid are PYR_{1A} (N-alkyl-N-methylpyrrolidinium) - TFSI (bis(trifluoromethanesulfonyl)imide, or PYR_{1A}-FSI (bis(fluorosulfonyl)imide).
The lithium salt may be any one of various lithium salts used in the art. Examples of the lithium salt are LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (each of x and y is a natural number), LiCl, Lil, and a mixture thereof.

In a particular embodiment the LIB of the invention includes a cathode, an anode, and a separator which are wound or folded and housed in a battery case, wherein an organic electrolytic solution or an ionic liquid electrolyte solution is injected and the resultant structure is sealed with a cap assembly. The battery case may have a cylindrical, rectangular, sealed pouch or thin-film form.

In another aspect the invention relates to a battery module which may be formed by interposing the polymer electrolyte or the polymer gel electrolyte between the cathode and the anode. A plurality of the battery modules may be stacked in a bi-cell structure, and then impregnated or not with an organic electrolytic solution and the resultant structure is housed in a pouch and sealed, thereby completing manufacturing of a lithium battery pack.

In a further aspect the invention relates to a battery pack comprising at least a battery module of the invention. The battery modules may be stacked on each other to form a battery pack, and the battery pack may be used in high-capacity and high-performance devices, such as a notebook computer, a smartphone, an electric vehicle (EV), and stationary energy storage systems for renewable sources, etc.

Since the lithium ion cell of the invention, the battery module, and the battery pack show very good electrochemical performance in terms of cyclability, high voltage, high specific capacity and high specific energy, they are suitable for use in a wide variety of electronic devices.

Thus, in still a further aspect the invention thus relates to a device comprising a lithium ion cell, a battery module or a battery pack according to the invention. Examples of said devices are, without limitation, electric vehicles (EVs), hybrid electric vehicles (HEVs), and plug-in hybrid electric vehicles (PHEVs), and portable electric devices, like computers, smart-phones, and stationary energy storage for renewable sources, etc.

In another aspect the invention relates to a method for preparing the cathode of the invention, said method comprising the following steps:
a) preparing a slurry comprising the lithium transition metal oxide having a spinel structure or a lithium transition metal compound having an olivine structure, graphene, carbon black, a binder and a solvent
b) casting the slurry on a current collector; and
c) drying the slurry-collector set to obtain the cathode.

Accordingly, first a lithium transition metal oxide having a spinel structure or a lithium transition metal compound having an olivine structure, graphene, carbon black, and a binder in the amounts above described, and a solvent, are mixed together to prepare an active slurry. Said active slurry is then casted on a current collector by conventional methods. According to a particular embodiment, the slurry is directly coated on a current collector following the doctor Blade technique and dried to form a cathode. According to another embodiment the active slurry is casted on a separate support, is then separated from the support as a film and then the film is deposited by lamination on a current collector to form the cathode.

The following examples are non-limiting and are merely representative of various aspects of the invention.

### EXAMPLES

### Example 1

Cathodes were prepared with 73 wt% to 78 wt% of LNMO, 10-15 wt% of graphene and carbon black and 12 wt% of PVDF. The components were mixed and dispersed in N-methylpyrrolidone as solvent in a proportion by weight of 5:1 in respect of the LNMO. Mixing was carried out under magnetic stirring for 24 h. The resulting paste was deposited by casting onto an aluminium current collector using the doctor Blade technique. The deposition rate was fixed to 10 mm/s. To prepare the cathodes of the invention with different thicknesses, blade heights from 400 to 1500 µm, usually from 500 to 1500 µm were used. After the slurry was casted, it was dried at 70 °C on a calefactory plate for 2 hours and thereafter at 120 °C in vacuum for 12 hours. All composites according to the invention showed good adherence and excellent mechanical proporties, even at thicknesses greater than 150 µm.

Composites cathodes comprising 5-10 wt% of carbon black as sole conductive additive for the comparative examples were prepared following the same methodology.

### Electrochemical lithium cells

For the electrochemical studies the cathodes were assembled in hermetic two electrodes coin-type cells (CR2032). These were constituted by (i) a negative electrode (a lithium pellet acted also as the reference electrode); (ii) the positive electrode, e.g., the composite cathode under study (a 13 mm diameter circle formed by an aluminum 14 µm thick current collector and the electrode composite); (iii) an electrolyte embedded in a separator (Whatman model BT 2043) place between both electrodes. The electrolyte was 1 M LiPF₆ solution in anhydrous ethylene carbonate and dimethyl carbonate (1:1 weight ratio). These components were assembled in a coin-type cell (CR2032) inside an argon glove box in which the water content was below 1 ppm.

### Electrochemical measurements

The cells were galvanostatically cycled at room temperature by an Arbin instrument (model BT 2043) between 4 V and 5 V at 0.2C, 0.5C and 1C rates. These currents correspond to those expected for discharge times of 5, 2, 1, h. The C-value is the capacity of the positive electrode calculated from the theoretical capacity of LiNi_{0.5}Mn_{1.5}O₄ (147 mAh/g) and the mass of this material in the electrode composite. The charge current was always 0.5C except for the slowest tested rate for which 0.2C was also used in the charge step. Five cycles for every current were performed. To determine the cycling performances of the electrode composites of this invention, constant 1C charge/discharge currents were applied between the potential range from 4.3 V to 5 V.. Analogous methods were used to measure the electrochemical properties of LMO and LFP, but using potential ranges from 3.2 to 4.6 V in the case of LMO and from 2 to 4.2 V in the case of LFP.

## Claims

1. An electrode composite comprising:
4 wt% to 8 wt% graphene
4 wt% to 8 wt% carbon black
4 wt% to 18 wt% binder
the rest being a lithium transition metal oxide having a spinel structure or a lithium transition metal compound having an olivine structure, and presenting a thickness above 80 µm and an active mass loading above 7 mg/cm².

2. The electrode composite according to claim 1, presenting a thickness from 100 to 340 µm.

3. The electrode composite material according to any of claims 1 or 2, wherein the lithium transition metal oxide having a spinel structure presents the following formula (IV):
LiₓMn_{1.5-y}Ni_{0.5-z}M_{y+z}O₄₋ₙXₙ
wherein 0.9≤x≤1.1, 0≤y≤0.2, 0≤z≤0.3, and 0≤n≤1;
M represents one or more elements selected from the group consisting of titanium (Ti), vanadium (V), chrome (Cr), cobalt (Co), iron (Fe), cooper (Cu), zinc (Zn), aluminum (Al), silicon (Si), gallium (Ga), zirconium (Zr), niobium (Nb), molybdenum (Mo), tungsten (W), barium (Ba), calcium (Ca), strontium (Sr), lanthanum (La), cerium (Ce), silver (Ag), tantalum (Ta), hafnium (Hf), ruthenium (Ru), bismuth (Bi), antimony (Sb), tin (Sn), and arsenic (As); and
X represents one or more elements selected from the group consisting of fluorine (F), chlorine (CI), bromine (Br), and iodine (I).

4. The electrode composite according to claim 3, comprising 78 wt% of LiMn_{1.5}Ni_{0.5}O₄, 5 wt% graphene, 5 wt% carbon black and 12 wt% PVDF.

5. The electrode composite material according to any of claims 1 or 2, wherein the lithium transition metal oxide having a spinel structure presents the following formula (V):
LiₓMn_{2-y}Ni_{y}O₄₋ₙXₙ
wherein 0.9≤x≤1.1, 0≤y≤0.5, and 0≤n≤1; and
X represents one or more elements selected from the group consisting of fluorine (F), chlorine (CI), bromine (Br), and iodine (I).

6. The electrode composite material according to any of claims 1 or 2, wherein the lithium transition metal compound has an olivine structure and presents the following formula (VI):
LiₓFe_{1-y}M_{y}(PO₄₋ₙ)Xₙ
wherein 0.9≤x≤1.1, 0≤y≤0.5, and
M represents one or more elements selected from the group consisting of titanium (Ti), aluminum (Al), nickel (Ni), cobalt (Co), niobium (Nb) and magnesium (Mg); and
X represents one or more elements selected from the group consisting of fluorine (F), chlorine (CI), bromine (Br), and iodine (I), sulfur (S) and nitrogen (N).

7. The electrode composite according to any one of claims 1 to 6, wherein the binder is selected from the group consisting of fluorinated polymers such as poly(vinyldifluoroethylene) (PVDF), poly(vinyldifluoroethylene-co-hexafluoropropylene) (PVDF-HFP), poly(tetrafluoroethylene) (PTFE), polyimides, and water-soluble binders such as poly(ethylene) oxide, polyvinyl-alcohol (PVA), cellulose, carboxymethylcellulose (CMC), starch, hydroxypropylcellulose, regenerated cellulose, polyvinyl pyrrolidone (PVP), polyethylene, polypropylene, ethylene-propylene-diene terpolymer (EPDM), sulfonated EPDM, styrene-butadiene rubber (SBR), and fluoro rubber, and copolymers and mixtures thereof, preferably PVDF.

8. A cathode comprising a current collector and disposed on the current collector the composite electrode according to any of the preceding claims 1 to 7.

9. A lithium ion cell comprising a cathode according to claim 8.

10. A battery module comprising a lithium ion cell according to claim 9.

11. A battery pack comprising at least a battery module according to claim 10.

12. A device comprising a lithium ion cell, a battery module or a battery pack according to any one of claims 9 to 11.

13. A method for preparing a cathode according to claim 8, comprising:
a) preparing a slurry comprising the lithium transition metal oxide having a spinel structure or the lithium transition metal compound having olivine structure, graphene, carbon black as conductive additives, a binder and a solvent
b) casting the slurry onto a current collector; and
c) drying the paste to obtain the composite cathode/current collector assembly.

## Patentansprüche

1. Kompositelektrode umfassend:
4 wt% bis 8 wt% Graphen
4 wt% bis 8 wt% Ruß
4 wt% bis 18 wt% Bindemittel
der Rest ist ein Lithiumübergangsmetalloxid mit einer Spinellstruktur oder eine Lithiumübergangsmetallverbindung mit einer Olivinstruktur, und weist eine Dicke von über 80 µm und eine aktive Massebelastung von über 7 mg/cm² auf.

2. Kompositelektrode nach Anspruch 1, eine Dicke von 100 bis 340µm aufweisend.

3. Kompositelektrodenmaterial nach einem der Ansprüche 1 oder 2, wobei das Lithiumübergangsmetalloxid mit einer Spinellstruktur die folgende Formel (IV) aufweist:
LiₓMn_{1,5-y}Ni_{0,5-z}M_{y+z}O₄₋ₙXₙ
wobei 0,9≤x≤1,1; 0≤y≤0,2; 0≤z≤0,3; und 0≤n≤1;
M steht für ein oder mehrere Elemente ausgewählt aus der Gruppe bestehend aus Titan (Ti), Vanadium (V), Chrom (Cr), Kobalt (Co), Eisen (Fe), Kupfer (Cu), Zink (Zn), Aluminium (Al)), Silicium (Si), Gallium (Ga), Zirkonium (Zr), Niob (Nb), Molybdän (Mo), Wolfram (W), Barium (Ba), Calcium (Ca), Strontium (Sr), Lanthan (La)), Cer (Ce), Silber (Ag), Tantal (Ta), Hafnium (Hf), Ruthenium (Ru), Wismut (Bi), Antimon (Sb), Zinn (Sn) und Arsen (As); und
X steht für ein oder mehrere Elemente, die ausgewählt sind aus der Gruppe bestehend aus Fluor (F), Chlor (Cl), Brom (Br) und Iod (I).

4. Kompositelektrode nach Anspruch 3, umfassend 78 wt% von LiMn_{1,5}Ni_{0,5}O₄, 5 wt% Graphen, 5 wt% Ruß und 12 wt% PVDF.

5. Kompositelektrodenmaterial nach einem der Ansprüche 1 oder 2, wobei das Lithiumübergangsmetalloxid mit einer Spinellstruktur die folgende Formel (V) aufweist:
LiₓMn_{2-y}Ni_{y}O₄₋ₙXₙ
wobei 0,9≤x≤1,1; 0≤y≤0,5; und 0≤n≤1; und
X für ein oder mehrere Elemente steht ausgewählt aus der Gruppe bestehend aus Fluor (F), Chlor (Cl), Brom (Br), und Iod (I).

6. Kompositelektrodenmaterial nach einem der Ansprüche 1 oder 2, wobei die Lithiumübergangsmetallverbindung eine Olivinstruktur aufweist und die folgende Formel (VI) aufweist:
LiₓFe_{1-y}M_{y}(PO₄₋ₙ)Xₙ
wobei 0,9≤x≤1,1; 0≤y≤0,5; und 0≤n≤1;
M steht für ein oder mehrere Elemente ausgewählt aus der Gruppe bestehend aus Titan (Ti), Aluminium (Al), Nickel (Ni), Kobalt (Co), Niob (Nb), Magnesium (Mg); und X steht für ein oder mehrere Elemente ausgewählt aus der Gruppe bestehend aus Fluor (F), Chlor (Cl), Brom (Br), und Iod (I), Schwefel (S) und Stickstoff (N).

7. Kompositelektrodenmaterial nach einem der Ansprüche 1 bis 6, wobei das Bindemittel ausgewählt ist aus einer Gruppe bestehend aus fluorierten Polymeren, wie Poly(vinyldifluorethylen) (PVDF), poly(vinyldifluorethylen-co-hexafluorpropylen) (PVDF-HFP), poly(tetrafluorethylen) (PTFE), Polyimide, und wasserlösliche Bindemittel wie Poly(ethylen)oxid, Polyvinylalkohol (PVA), Cellulose, Carboxymethylcellulose (CMC), Stärke, Hydroxypropylcellulose, regenerierte Cellulose, Polyvinylpyrrolidon (PVP), Polyethylen, Polypropylen, Ethylen-Propylen-Dien-Terpolymer (EPDM), sulfoniertes EPDM, StyrolButadien-Kautschuk (SBR), und Fluorkautschuk, und Copolymere und Mischungen davon, vorzugsweise PVDF.

8. Kathode mit einem Stromabnehmer und mit einer an dem Stromabnehmer angeordneten Kompositelektrode nach einem der vorhergehenden Ansprüche 1 bis 7.

9. Lithium-Ionen-Zelle mit einer Kathode nach Anspruch 8.

10. Batteriemodul mit einer Lithium-Ionen-Zelle nach Anspruch 9.

11. Batteriepack zumindest ein Batteriemodul nach Anspruch 10 umfassend.

12. Vorrichtung mit einer Lithium-Ionen-Zelle, einem Batteriemodul oder einem Batteriepack nach einem der Ansprüche 9 bis 11.

13. Verfahren zur Herstellung einer Kathode nach Anspruch 8 umfassend:
a) Herstellen einer Aufschlämmung, umfassend ein Lithiumübergangsmetalloxid mit einer Spinellstruktur oder eine Lithiumübergangsmetallverbindung mit einer Olivinstruktur, Graphen, Ruß als leitfähige Zusatzstoffe, ein Bindemittel und ein Lösungsmittel,
b) Gießen der Aufschlämmung auf einen Stromabnehmer; und
c) Trocknen der Paste, um die Kompositkathoden/Stromabnehmer-Anordnung zu erhalten

## Revendications

1. Composite d'électrode comprenant :
4 % en poids à 8 % en poids de graphène
4 % en poids à 8 % en poids de noir de carbone
4 % en poids à 18 % en poids de liant
le reste étant un oxyde de lithium et de métal de transition ayant une structure de spinelle ou un composé de lithium et de métal de transition ayant une structure d'olivine, et présentant une épaisseur supérieure à 80 µm et une charge de masse active supérieure à 7 mg/cm².

2. Composite d'électrode selon la revendication 1, présentant une épaisseur de 100 à 340 µm.

3. Matériau composite d'électrode selon l'une quelconque des revendications 1 et 2, dans lequel l'oxyde de lithium et de métal de transition ayant une structure de spinelle présente la formule (IV) suivante :
LiₓMn_{1,5-y}Ni_{0,5-z}M_{y+z}O₄₋ₙXₙ
dans laquelle 0,9≤x≤1,1, 0≤y≤0,2, 0≤z≤0,3, et 0≤n≤1;
M représente un ou plusieurs éléments choisis dans l'ensemble constitué par le titane (Ti), le vanadium (V), le chrome (Cr), le cobalt (Co), le fer (Fe), le cuivre (Cu), le zinc (Zn), l'aluminium (Al), le silicium (Si), le gallium (Ga), le zirconium (Zr), le niobium (Nb), le molybdène (Mo), le tungstène (W), le baryum (Ba), le calcium (Ca), le strontium (Sr), le lanthane (La), le cérium (Ce), l'argent (Ag), le tantale (Ta), le hafnium (Hf), le ruthénium (Ru), le bismuth (Bi), l'antimoine (Sb), l'étain (Sn), et l'arsenic (As) ; et
X représente un ou plusieurs éléments choisis dans l'ensemble constitué par le fluor (F), le chlore (Cl), le brome (Br), et l'iode (I).

4. Composite d'électrode selon la revendication 3, comprenant 78 % en poids de LiMn_{1,5}Ni_{0,5}0₄, 5 % en poids de graphène, 5 % en poids de noir de carbone et 12 % en poids de PVDF.

5. Matériau composite d'électrode selon l'une quelconque des revendications 1 et 2, dans lequel l'oxyde de lithium et de métal de transition ayant une structure de spinelle présente la formule (V) suivante :
LiₓMn_{2-y}Ni_{y}O₄₋ₙXₙ
dans laquelle 0,9 ≤ x ≤ 1,1, 0 ≤ y ≤ 0,5, et 0 ≤ n ≤ 1 ; et
X représente un ou plusieurs éléments choisis dans l'ensemble constitué par le fluor (F), le chlore (Cl), le brome (Br), et l'iode (I).

6. Matériau composite d'électrode selon l'une quelconque des revendications 1 et 2, dans lequel le composé de lithium et de métal de transition a une structure d'olivine et présente la formule (VI) suivante :
LiₓFe_{1-y}M_{y}(PO₄₋ₙ)Xₙ
dans laquelle 0,9 ≤ x ≤ 1,1, 0 ≤ y ≤ 0,5, et 0 ≤ n ≤ 1 ;
M représente un ou plusieurs éléments choisis dans l'ensemble constitué par le titane (Ti), l'aluminium (Al), le nickel (Ni), le cobalt (Co), le niobium (Nb) et le magnésium (Mg) ; et
X représente un ou plusieurs éléments choisis dans l'ensemble constitué par le fluor (F), le chlore (Cl), le brome (Br), et l'iode (I), le soufre (S) et l'azote (N).

7. Composite d'électrode selon l'une quelconque des revendications 1 à 6, dans lequel le liant est choisi dans l'ensemble constitué par les polymères fluorés tels que le polyvinyldifluoroéthylène (PVDF), le copoly(vinyldifluoroéthylène/ hexafluoropropylène) (PVDF-HFP), le polytétrafluoroéthylène (PTFE), les polyimides, et les liants solubles dans l'eau tels que le poly(oxyde d'éthylène), le poly(alcool vinylique) (PVA), la cellulose, la carboxyméthylcellulose (CMC), l'amidon, l'hydroxypropylcellulose, la cellulose régénérée, la polyvinylpyrrolidone (PVP), le polyéthylène, le polypropylène, le terpolymère d'éthylène-propylène-diène (EPDM), l'EPDM sulfoné, le caoutchouc de styrène-butadiène (SBR), et le caoutchouc fluoré, ainsi que leurs copolymères et leurs mélanges, de préférence le PVDF.

8. Cathode comprenant un collecteur de courant et, disposée sur le collecteur de courant, l'électrode composite selon l'une quelconque des revendications 1 à 7.

9. Pile à lithium-ion comprenant une cathode selon la revendication 8.

10. Module de batterie comprenant une pile à lithium-ion selon la revendication 9.

11. Bloc-piles comprenant au moins un module de batterie selon la revendication 10.

12. Dispositif comprenant une pile à lithium-ion, un module de batterie ou un bloc-piles selon l'une quelconque des revendications 9 à 11.

13. Méthode de préparation d'une cathode selon la revendication 8, comprenant :
a) la préparation d'une bouillie comprenant l'oxyde de lithium et de métal de transition ayant une structure de spinelle ou le composé de lithium et de métal de transition ayant une structure d'olivine, du graphène, du noir de carbone servant d'additifs conducteurs, un liant et un solvant
b) la coulée de la bouillie sur un collecteur de courant ; et
c) le séchage de la pâte pour que soit obtenu l'assemblage de cathode composite/collecteur de courant.
